Europäisches Patentamt

European Patent Office

Office européen des brevets

(11) Publication number: **0 639 701 A1**

## EUROPEAN PATENT APPLICATION

(21) Application number: **94112863.9**

(22) Date of filing: **18.08.94**

(51) Int. Cl.6: **F01N 3/28**, F01N 3/02

(30) Priority: **20.08.93 US 109645**

(43) Date of publication of application:
**22.02.95 Bulletin 95/08**

(84) Designated Contracting States:
**DE FR GB IT**

(71) Applicant: **MINNESOTA MINING AND
MANUFACTURING COMPANY
3M Center,
P.O. Box 33427
St. Paul,
Minnesota 55133-3427 (US)**

(72) Inventor: **Howorth, Gary F., c/o Minnesota
Mining and
Manufacturing Co,
2501 Hudson Road,**

**P.O. Box 33427
St. Paul,
Minnesota 55133-3427 (US)**
Inventor: **Stroom, Paul D., c/o Minnesota
Mining and
Manufacturing Co,
2501 Hudson Road,
P.O. Box 33427
St. Paul,
Minnesota 55133-3427 (US)**

(74) Representative: **Hilleringmann, Jochen,
Dipl.-Ing. et al
Patentanwälte
von Kreisler-Selting-Werner,
Bahnhofsvorplatz 1 (Deichmannhaus)
D-50667 Köln (DE)**

(54) **Mounting mat with high temperature sealing material.**

(57) A high temperature resistant, corrugated, metal wire mesh mounting mat (32) has a high temperature sealing material (34). The high temperature sealing material comprises binder material in the range from about 5 to about 85 percent by weight and dispersed therein glass particles in the range from about 95 to about 15 percent by weight, based on the total weight of said binder material and said glass particles, wherein said glass particles are made of a glass having a softening point of at least about 350°C, and wherein the combined weight of said binder material and said glass particles is at least 20 percent by weight of the total weight of said high temperature sealing material. The mounting mat is useful in the construction of catalytic converters and diesel particulate traps (10).

Fig. 1

## Field of the Invention

This invention relates to high temperature resistant, corrugated, metal wire mesh mounting mats with a high temperature sealing material. The mounting mats are useful in the construction of catalytic converters and diesel particulate traps or filters.

## Description of the Related Art

High temperature metal (e.g., stainless steel) wire mesh mounting mats are used to hold monoliths (e.g., catalytic converter elements or diesel particulate filters) in place while being subjected to exposure to gases at moderate pressure pulsations and temperatures (typically less than about 700°C). The inherently porous nature of such mats, for example, when used as a mounting mat in a catalytic converter utilizing a monolithic catalytic converter element allows at least a portion of exhaust gases to bypass the catalytic converter element and flow through the mounting mat.

## Summary of the Invention

The present invention provides a mounting mat comprising:
(a) a high temperature resistant, corrugated, metal wire mesh mat having a lateral edge; and
(b) a sufficient amount of a high temperature sealing material covering the lateral edge to reduce penetration, when exposed to hot, impinging gases (i.e., above about 300°C, preferably above about 350°C, and more preferably above about 500°C), of the gases through the lateral edge, the high temperature sealing material comprising binder material in the range from about 5 binder material in the range from about 5 to about 85 percent by weight and dispersed (uniformly or nonuniformly) therein glass particles in the range from about 95 to about 15 percent by weight, based on the total weight of the binder material and the glass particles, wherein the glass particles are made of a glass having a softening point of at least about 350°C, and wherein the combined weight of the binder material and the glass particles is at least 20 percent by weight (preferably, at least about 35 percent by weight, more preferably, at least about 50 percent by weight, and, most preferably, at least about 75 percent by weight) of the total weight of the high temperature sealing material.

In yet another aspect, the present invention provides a mounting mat comprising:
(a) a high temperature resistant, corrugated, metal wire mesh mat having first and second lateral edges; and
(b) a sufficient amount of the high temperature sealing material incorporated in the mounting mat to reduce penetration, when exposed to hot, impinging gases, of the gases through the first lateral edge to the second lateral edge.

In another aspect, the present invention provides a catalytic converter or a diesel particulate filter comprising a metallic casing, a catalytic converter element or a diesel particulate filter element disposed within the metallic casing, and a mounting mat according to the present invention disposed between the catalytic converter element or the diesel particulate filter element and the metallic casing for positioning the catalytic converter element or the diesel particulate filter element within the metallic casing and for absorbing mechanical vibration (i.e., at least partially damping mechanical vibrations).

In another aspect, the present invention provides a catalytic converter or a diesel particulate filter comprising:
(a) a metallic casing;
(b) a catalytic converter element or a diesel particulate filter element disposed within the metallic casing;
(c) a high temperature resistant, corrugated, metal wire mesh mounting mat having a first lateral edge and an opposite, second lateral edge, the mounting mat being disposed between the catalytic converter element or the diesel particulate filter element and the metallic casing for positioning the catalytic converter element or the diesel particulate filter element within the metallic casing and for absorbing mechanical vibration; and
(d) a sufficient amount of the high temperature sealing material disposed between the metallic casing and the catalytic converter element or the diesel particulate filter element, and positioned with respect to at least one of the first lateral edge or the second lateral edge of the mounting mat to reduce penetration, when exposed to the hot gases, of the gases through the lateral edge.

In this application:
"high temperature resistant, corrugated, metal wire mesh mounting mat" or "high temperature resistant, corrugated, metal wire mesh mat" as used herein refers to a corrugated, metal wire mesh material suitable for use as a mounting mat at temperatures of at least about 300°C, in applications wherein a mounting mat is positioned or disposed between a monolith or composite article and a supporting means (e.g., in the case of a catalytic converter or diesel particulate filter, a metallic casing);

"binder material" refers to polymeric and other organic components of the high temperature sealing material that impart flexibility and hold the glass particles together;

"resilient" refers to the ability of a sheet or mat to conform to a curved surface (i.e., to wrap around a curved surface) without undesirable buckling or cracking of the sheet or mat;

"conformable" refers to the ability of the edge protectant material to accommodate dimensional changes during heating to, cooling from, and at use temperatures;

"glass frit" refers to glass (e.g., silicate glass) that has been melted and quenched (e.g., in water or air) to form small, friable glass particles; and

"glass" as used herein refers to an amorphous (i.e., a material having a diffuse x-ray diffraction pattern without definite lines to indicate the presence of a crystalline phase) inorganic oxide material.

The use of the high temperature sealing material provides a solution to the problem of exhaust gases bypassing, for example, the mounting mat of, for example, a catalytic converter element.

## Brief Description of the Drawing

FIG. 1 is a perspective view of a catalytic converter (or diesel particulate filter) according to the present invention shown in disassembled relation;

FIG. 2 is a partial cut away view of a catalytic converter (or diesel particulate filter) according to the present invention;

FIGS. 3, 4, and 5 are each partial views of mounting mats according to the present invention;

FIG. 6 shows an embodiment of a mounting mat according to the present invention;

FIG. 7 is a perspective view of a catalytic converter (or diesel particulate filter) according to the present invention shown in disassembled relation;

FIG. 8 is a partial cutaway view of a catalytic converter (or diesel particulate filter) according to the present invention;

FIG. 9 shows an embodiment of a mounting mat according to the present invention; and

FIG. 10 is a partial cutaway view of a catalytic converter (or diesel particulate filter) according to the present invention.

## Detailed Description of the Preferred Embodiments

The mounting mats according to the present invention are typically resilient.

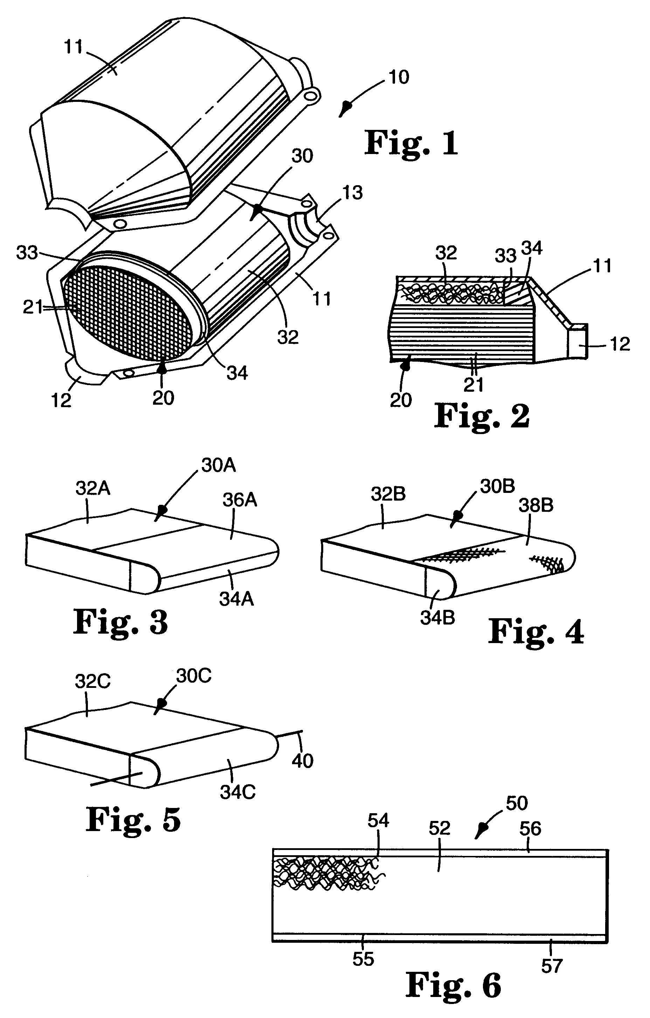

Referring to FIG. 1, catalytic converter (or diesel particulate filter) 10 comprises metallic casing 11 with generally frustoconical inlet and outlet ends 12 and 13, respectively. Disposed within casing 11 is a monolithic catalytic converter element (or diesel particulate filter element) 20 formed of a honeycomb ceramic or metal having a plurality of gas flow channels 21 therethrough. Surrounding catalytic converter element (or diesel particulate filter element) 20 is mounting mat 30 comprising high temperature resistant, corrugated, metal wire mesh mat 32 having lateral edge 33 and high temperature sealing material 34. Mounting mat 30 serves to tightly but resiliently support catalytic converter element (or diesel filter particulate element) 20 within casing 11. High temperature sealing material 34 serves to reduce (preferably, minimize) penetration of exhaust gases through mat 32. The high temperature sealing material can be present at the inlet end, the outlet end, or both.

FIG. 2 is a partial cut away view of assembled catalytic converter (or diesel particulate filter) 10 wherein mounting mat 30 is wrapped around catalytic converter element (or diesel particulate filter element) 20 which are positioned inside metallic casing 11.

FIG. 3 shows a partial view mounting mat 30A wherein high temperature sealing material 34A is held to high temperature resistant, corrugated, metal wire mesh mat 32A by means of adhesive tape 36A. FIG. 4 shows a partial view of mounting mat 308 wherein wire screen 38B secures high temperature sealing material 34B to high temperature resistant, corrugated, metal wire mesh mat 32B. FIG. 5 shows a partial view of mounting mat 30C having high temperature resistant, corrugated, metal wire mesh mounting mat 32C wherein edge protectant material 34C is reinforced with ceramic fiber (or metal wire) 40. FIG. 6 shows mounting mat 50 comprising high temperature resistant, corrugated, metal wire mesh mounting mat 52 having edges 54 and 55 and high temperature sealing material 56 and 57, positioned next to edges 54 and 55, respectively.

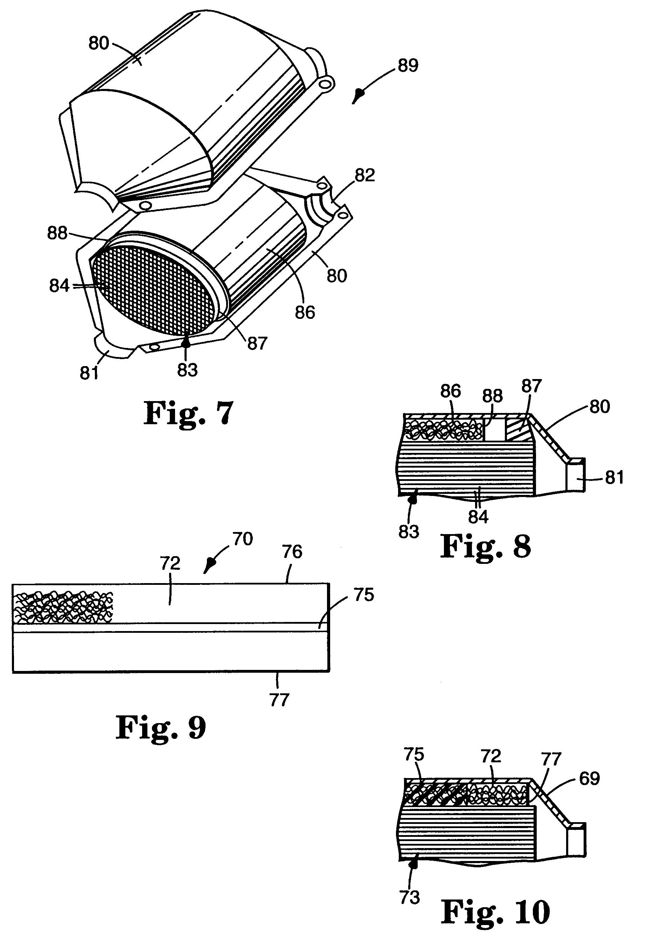

Referring to FIG. 7, catalytic converter (or diesel particulate filter) 89 comprises metallic casing 80 with generally frustoconical inlet and outlet ends 81 and 82, respectively. Disposed within casing 80 is a monolithic catalytic converter element (or diesel particulate filter element) 83 formed of a honeycomb ceramic or metal having a plurality of gas flow channels 84 therethrough. Surrounding catalytic converter element (or diesel particulate filter element) 83 is high temperature resistant, corrugated, metal wire mesh mounting mat 86. Mounting mat 86 serves to tightly but resiliently support catalytic converter element (or diesel particulate filter element) 83 within casing 80. High temperature sealing material 87, which optionally is positioned with respect to mat 86 to leave a gap, serves to reduce (preferably, minimize) penetration through lateral edge 88 of high temperature resistant, corrugated, metal wire mesh mounting mat 86. The high temperature sealing material can be present at the inlet end, the outlet end, or both.

FIG. 8 is a partial cutaway view of assembled catalytic converter (or diesel particulate filter) 89 wherein mounting mat 86 is wrapped around catalytic converter monolith (or diesel particulate filter element) 83 which is positioned inside metallic casing 80.

FIG. 9 shows mounting mat 70 comprising high temperature resistant, corrugated, metal wire mesh mat 72 having edges 76 and 77 and high temperature sealing material 75 incorporated in (e.g., within) mat 70. FIG. 10 is a partial cut away view of an assembled catalytic converter (or diesel particulate filter) wherein mounting mat 70 is wrapped around catalytic converter element (or diesel particulate filter element) 73 which is positioned inside metallic casing 69. Alternatively, a portion of the high temperature sealing material can be within the wire mesh mat, and a portion can be placed on a major exterior surface thereof.

The metallic casing can be made from suitable materials known in the art for such use. Preferably, the casing is made of stainless steel.

The monolithic shape can be, for example, a catalytic converter element or a monolithic diesel particulate filter element. Suitable catalytic converter elements are known in the art and include those made of metal or ceramic. A useful catalytic converter element is disclosed, for example, in U.S. Pat. No. RE 27,747 (Johnson).

Further, ceramic catalytic converter elements are commercially available, for example, from Corning Inc. of Corning, NY, and NGK Insulator Ltd. of Nagoya, Japan. For example, a honeycomb ceramic catalyst support is marketed under the trade designation "CELCOR" by Corning Inc. and "HONEYCERAM" by NGK Insulator Ltd. Metal catalytic converter elements are commercially available from Behr GmbH and Co. of Germany.

For additional details regarding catalytic monoliths see, for example, "Systems Approach to Packaging Design for Automotive Catalytic Converters," Stroom et al., Paper No. 900500, SAE Technical Paper Series, 1990; "Thin Wall Ceramics as Monolithic Catalyst Supports," Howitt, Paper 800082, SAE Technical Paper Series, 1980; and "Flow Effects in Monolithic Honeycomb Automotive Catalytic Converters," Howitt et al., Paper No. 740244, SAE Technical Paper Series, 1974.

The catalyst materials coated onto the catalytic converter elements include those known in the art (e.g., metals such as ruthenium, osmium, rhodium, iridium, nickel, palladium, and platinum, and metal oxides such as vanadium pentoxide and titanium dioxide). For further details regarding catalytic coatings see, for example, U.S. Pat. No. 3,441,381 (Keith et al.).

Conventional monolithic type diesel particulate filter elements are typically wall flow filters comprised of honeycombed, porous, crystalline ceramic (e.g., cordierite) material. Alternate cells of the honeycombed structure are typically plugged such that exhaust gas enters in one cell and is forced through the porous wall of one cell and exits the structure through another cell. The size of the diesel particulate filter element depends on the particular application needs. Useful diesel particulate filter elements are commercially available, for example, from Corning Inc. of Corning, NY and NGK Insulator Ltd. of Nagoya, Japan. Further, useful diesel particulate filter elements are discussed in "Cellular Ceramic Diesel Particulate Filter," Howitt et al., Paper No. 810114, SAE Technical Paper Series, 1981.

Suitable high temperature resistant, corrugated, metal (e.g., stainless steel) wire mesh mounting mats are known in the art, and are commercially available, for example, from ACS Industries of Woonsocket, RI. Preferred mats from ACS Industries are made of 310 or 316 stainless steel, have about 0.25 mm (0.010 inch) diameter wire, are about 5.1 mm 0.20 inch) thick, and have about 1.2 corrugations per cm (3 corrugations per inch). Suitable high temperature resistant, corrugated, metal wire mesh mounting mats are disclosed, for example, in U.S. Pat. No. 4,683,010 (Hartmann).

The mounting mat can be cut to any desired size and shape. The size and shape of the mounting mat according to the present invention depends on the application requirements. For example, automobile catalytic converters typically are smaller than diesel converters and generally require a correspondingly smaller mounting mat. Mounting mats can be stacked so that more than one layer of mat is wrapped around a monolith. Typically, the thickness of each metal mesh material is in the range from about 3 mm to about 8 mm.

The high temperature sealing material preferably comprises binder material in the range from about 15 to about 85 (more preferably, about 25 to about 75, and most preferably, about 35 to about 45) percent by weight and dispersed therein glass particles in the range from about 85 to about 15 (more preferably, about 75 to about 25, and most preferably, about 60 to about 30) percent by weight, based on the total weight of the high temperature sealing material.

Suitable organic binder materials for the high temperature sealing material include aqueous polymer emulsions and solvent-based polymers, and 100% solids polymers. The solvent-based polymeric binders can include a polymer such as an acrylic, a polyurethane, or rubber-based organic polymer which allow flexibility. The 100% solids polymers include natural rubber, styrenebutadiene rubber, and other elastomers.

The binder material can include at least one of a tackifier(s), a plasticizer(s), or both. Tackifiers, or tackifying resins can be hydrocarbons or modified resin esters, and typically provide adhesive-type properties to a polymer. Tackifiers aid in holding the binder, glass, particles and filler together. Plasticizers tend to soften a polymer matrix and thereby contribute to the flexibility and moldability of the high temperature sealing material. It is desirable that the high temperature sealing material be flexible and moldable so that it can conform, for example, to the shape of the gap between, for example, a catalytic converter element and a metallic casing.

Preferably, the organic binder material includes an aqueous acrylic emulsion. Acrylic emulsions are preferred because of their aging properties and noncorrosive combustion products. Useful acrylic emulsions include those commercially available under the trade designations "RHOPLEX TR-934" (a 44.5% by weight solids aqueous acrylic emulsion) and "RHOPLEX HA-8" (a 44.5% by weight solids aqueous emulsion of acrylic copolymers) from Rohm and Haas of Philadelphia, PA. A preferred acrylic emulsion is commercially available under the trade designation "NEOCRYL XA-2022" (a 60.5% solids aqueous dispersion of acrylic resin) from ICI Resins US of Wilmington, MA.

A preferred organic binder material comprises acrylic resin in the range from about 20 to about 40 percent by weight, plasticizer(s) (e.g., such as that commercially available under the trade designation "SANTICIZER 148" (isodecyl diphenyl diphosphate) from Monsanto of St. Louis, MO) in the range from about 40 to about 20 percent by weight, tackifier(s) (e.g., rosin tackifier such as that commercially available under the trade designation "SNOWTACK 820A" (a 50% by weight aqueous rosin dispersion; melting point of rosin: 55°C) from Eka Nobel, Inc., of Toronto, Canada) in the range from about 40 to about 20 percent by weight, based on the total weight of the resulting dispersion. These ranges provided a compromise between the desired flexibility of the binder material and minimizing the amount of organic binders which burn out during heating to the use temperature.

Suitable glass particle compositions will be apparent to those skilled in the art of formulating glass compositions. Such glasses may include those comprised of silicates of lithium, sodium, potassium, magnesium, calcium, and combinations thereof. Other metal oxides, such as boria and alumina, and oxides of transition metals (e.g., chromium, iron, cobalt, and zinc) commonly are used in glasses and may be present in the glass composition. The glass composition selected for a particular use is selected to be compatible at the use temperature with the materials in which the glass is in contact (e.g., the other components of the high temperature sealing material and, for example, in the case of a catalytic converter, the casing and the catalytic converter element).

Further, the glass composition chosen should not flow at the use temperature to the extent that such flow significantly affects the function of the high temperature sealing material. Most preferably, the glass at the use temperature softens and forms a cohesive mass.

Preferred silicate glass particles are commercially available from ICI Americas of Wilmington, DE, under the trade designation "CEEPREE FIRE BARRIER FILLER, GRADE C-200" (density: 2.68 g/cm$^3$; oil absorption: 20g/100g; specific surface area: 0.7 m$^2$/g; moisture content: <1%; Mohs hardness: 4; refractive indices: 1.52-1.58; and mean particle size: 30 micrometers).

The glass particles can be solid particles or beads, or hollow spheres. The size of the glass particles is dependent on the particular application requirements. Typically, the glass particles have an average particle size of less than about 300 micrometers. Glass particles less than about 300 micrometers in size typically are easier to disperse within the binder material.

The high temperature sealing material can further comprise additives such as fillers and extenders. Fillers and extenders may comprise up to about 65 weight percent of the high temperature sealing material. Preferably, these materials comprise no more than about 50 weight percent of the high temperature sealing material.

Suitable fillers include hydrated metal oxides (e.g., sodium silicate) and borates (e.g., boric acid and zinc borate). Preferably, the filler is relatively insoluble in water and chemically inert. The use of refractory

5

materials such as bentonite or kaolin-type clays and vermiculite as the filler may increase the useful life and/or use temperature of the high temperature sealing material. Forms of vermiculite include unexpanded vermiculite (i.e., as the ore), expanded vermiculite (i.e., heat treated, also known as exfoliated), or delaminated vermiculite.

Although expanded vermiculite can provide workable high temperature sealing material compositions, delaminated vermiculite is preferred. Delaminated vermiculite has the appearance of a powder and can be prepared, for example, by ball-milling or high shear mixing of unexpanded or expanded vermiculite.

Fillers can be in a variety of shapes including particulate and chopped fibers. The fiber can be reduced in size by conventional techniques including dry or wet ball milling. Useful fibers include graphite, silica, alumina-silica, calcia-silica, asbestos, and glass fibers. Aluminosilicate fibers are commercially available, for example, under the trade designation "CERAFIBER" from Thermal Ceramics of Augusta, GA.

Refractory materials such as clays may be used to increase the high temperature durability of the high temperature sealing material. Such refractory materials are preferably present up to 40 percent by weight, based on the total weight of the high temperature sealing material.

Extenders (e.g., silica sand) can be added to reduce the cost of the mixture without reducing its effectiveness.

Preferably, the binder material includes a tackifier(s) and plasticizer(s) which increases the conformability or moldability of the high temperature sealing material even after it has dried.

The high temperature sealing material can be prepared by mixing the binder material, glass particles, and any optional additives together. Optionally, water, dispersants, tackifiers, plasticizers, and/or surfactants can independently be added to aid in mixing the components together and/or to adjust the viscosity of the mixture. Mixing of the ingredients can be done by any convenient means including stirring by hand or using a mogul mixer. The resulting mixture, which is typically viscous, can then be formed into the desired shape. For example, the resulting mixture can be formed into a sheet, cut into strips, and then dried (e.g., in air) for several hours before application, for example, to an edge of the mounting mat. Alternatively, the viscous mass can be extruded into various shapes and attached or affixed to an edge of the mounting mat, or extruded into the desired shape and dried in air before application.

Suitable fibers for use as reinforcement fibers as shown, for example, in FIG. 5 or as chopped fibers dispersed within the high temperature sealing material include aluminosilicate fibers (available, for example, under the trade designations "NEXTEL 312 CERAMIC FIBERS," "NEXTEL 440 CERAMIC FIBERS," and "NEXTEL 550 CERAMIC FIBERS" from the 3M Company, "FIBERFRAX 7000M" from Carborundum Company of Niagara Falls, NY, "CERAFIBER" from Thermal Ceramics of Augusta, GA, and stainless steel fibers (commercially available, for example, under the trade designation "BEKI-SHIELD GR90/C2/2" from Bekaert Steel Wire Corp. of Atlanta, GA). Suitable ceramic fibers are also disclosed in U.S. Pat. Nos. 3,795,524 (Sowman) and 4,047,965 (Karst et al.).

The high temperature sealing material can be secured to the sheet material, for example, by means of a pressure sensitive adhesive tape or film or a metallic fabric (e.g., a stainless steel screen). A preferred metallic fabric is made of woven metal (preferably stainless steel) wire with an open area of less than 90%, wherein the wire has a diameter less than 1 mm (preferably about 0.20 mm). If additional means for securing the metal fabric are needed, such means can include tape, adhesive, and mechanical means such as sewing, stapling, nailing, riveting, staking, or crimping. Preferably, the edge of the metal fabric extends up to about 8 mm beyond the lengthwise edge of the mounting mat. Although typically preferred, it is not necessary that the entire length of the mat be covered by the metal fabric.

In some embodiments, the high temperature sealing material may be placed at the edge of the mat without reinforcement or fastening.

The mounting mat according to the present invention is useful as catalytic converter or diesel particulate filter mounting mat.

Objects and advantages of this invention are further illustrated by the following examples, but the particular materials and amounts thereof recited in these examples, as well as other conditions and details, should not be construed to unduly limit this invention. All parts and percentages are by weight unless stated otherwise.

Examples 1-22

The formulations of Examples 1-22, which are useful as the sealing material, are given in Table 1, below.

Table 1

| Example No. | Binder, % | Clay, % | Ceramic fiber, % | Glass particles, % | Boric acid, % | Sodium silicate cement, % | Expanded vermiculite, % | Delaminated vermiculite, % | Ball milled ceramic fiber, % |
|---|---|---|---|---|---|---|---|---|---|
| 1 | 35 | 9 | 7 | 49 | | | | | |
| 2 | 35 | | | 65 | | | | | |
| 3 | 35 | 5 | | 60 | | | | | |
| 4 | 35 | 2 | 5 | 58 | | | | | |
| 5 | 35 | 2 | 3 | 60 | | | | | |
| 6 | 35 | | | 55 | 0.5 | 2 | 7.5 | | |
| 7 | 35 | | | 60 | 0.5 | 2 | 2 | | |
| 8 | 35 | | | 55 | 3 | 2 | 5 | | |
| 9 | 35 | | | 56 | 3 | 3 | 3 | | |
| 10 | 35 | | | 55 | 3 | 5 | 2 | | |
| 11 | 35 | | | 55.8 | 1.1 | 5.4 | 2.7 | | |
| 12 | 35 | | | 57.1 | 1.8 | 2 | 4.1 | | |
| 13 | 35 | | | 58 | 3 | 2 | 2 | | |

| Example No. | Binder, % | Clay, % | Ceramic fiber, % | Glass particles, % | Boric acid, % | Sodium silicate cement, % | Expanded vermiculite, % | Delaminated vermiculite, % | Ball milled ceramic fiber, % |
|---|---|---|---|---|---|---|---|---|---|
| 14 | 35 | | | 55 | 1.8 | 4.1 | 4.1 | | |
| 15 | 35 | | | 57.1 | 1.8 | 4.1 | 2 | | |
| 16 | 35 | | | 55 | 0.5 | 7.5 | 2 | | |
| 17 | 35 | | | 56.8 | 0.5 | 3.9 | 3.8 | | |
| 18 | 30 | 16 | | 12 | | | | 12 | 30 |
| 19 | 28 | 7.5 | | 30 | | | 1.7 | 3.8 | 28 |
| 20 | 38 | | | 5 | | | 5 | 14 | 38 |
| 21 | 38 | 27 | 2 | 13 | | | 6 | | 14 |
| 22 | 35 | 9 | 7 | 49 | | | | | |

In Example 1, a 500 gram sample was prepared by charging a mogul mixer (#59821 from Baker Perkins of Saginaw, MI) having a 1 liter capacity, first with dry powder ingredients (i.e., clay) and then blending them for about 1-3 minutes. Next, the liquid ingredients (i.e., binder mixture) were added to the blend and the resulting material mixed for about 15-30 minutes. The fiber material was then added to the mixer and blended in for about 10-20 minutes.

The binder mixture was prepared by adding together 15 parts by weight acrylic emulsion (commercially available under the trade designation "NEOCRYL XA-2022" from ICI Resins US of Wilmington, MA), 15 parts by weight tackifier (commercially available under the trade designation "SNOWTACK 820A" from Eka Nobel, Inc., of Toronto, Canada), and 10 parts by weight plasticizer (commercially available under the trade

EP 0 639 701 A1

designation "SANTICIZER 148" from Monsanto of St. Louis, MO). The clay was a kaolin clay (commercially available under the trade designation "DIXIE CLAY" from Dixie Clay of Bath, SC). The ceramic fiber was an aluminosilicate ceramic fiber (commercially available under the trade designation "CERAFIBER" from Thermal Ceramics of Augusta, GA). The glass frit was a silicate-based glass frit (commercially available under the trade designation "CEEPREE FIRE BARRIER FILLER, GRADE C-200" from ICI Americas of Wilmington, DE).

In Examples 2-21, 50 gram samples were prepared by charging a 100 ml polypropylene beaker with the binder mixture as prepared in Example 1, glass frit ("CEEPREE FIRE BARRIER FILLER, GRADE C-200"), and any other ingredients and then stirring by hand until the mixture was homogeneous (about 15 minutes).

In Example 22, a binder mixture was prepared by adding together 15 parts by weight acrylic emulsion (commercially available under the trade designation "RHOPLEX HA-8" from Rohm and Haas Co. of Philadelphia, PA), 15 parts by weight tackifier ("SNOWTACK 820A"), and 10 parts by weight plasticizer (SANTICIZER 148").

The ceramic fiber was an aluminosilicate ceramic fiber ("CERAFIBER"). For Examples 18-21 the ceramic fibers were ball milled in a conventional 1 liter porcelain mill filled with 50 percent by volume of 1.25 cm (0.5 inch) diameter porcelain balls for about 15 minutes to obtain fibers about 50-100 micrometers in length. The fibers could be reduced in size by adding them to the mogul mixer and blending them with the other ingredients until the desired size of the fibers is achieved.

The boric acid was obtained from U.S. Borax of Los Angeles, CA. The sodium silicate cement for Examples 6-17 was obtained under the trade designation "INSA-LUTE ADHESIVE CEMENT NO. P-1," from Sauereisen Cements of Pittsburgh, PA. The expanded vermiculite was obtained from W. R. Grace & Co. of Cambridge, MA. The vermiculite was delaminated using the mogul mixer prepared by mixing for about 15-20 minutes with the other ingredients in the formulation.

For each formulation, the resulting viscous material was removed from the respective container and rolled with a glass jar or dowel into a sheet about 0.63 cm (0.25 inch) thick. Each sheet was dried in air at room temperature overnight. The sealing material was quite moldable even when it was dry.

**Button Test**

The button test was designed to examine how the high temperature sealing material behaved at elevated temperatures. After forming a sheet of sealing material, a 2.5 cm (1 inch) diameter disc was cut from the sheet after drying in air for about 30 minutes and then heated in a conventional laboratory, electrical resistance furnace. The disc was placed on the surface of a refractory brick after the furnace was up to temperature.

Some samples were indented at temperature with a metal crucible tong using light hand pressure. Samples which were relatively easy to indent were described as soft, whereas samples which were relatively difficult to indent were described as firm.

Example 1

The disc of material, heated to about 900°C, was firm and appeared to be fused, but did not melt. After heating at 950°C for 300 hours, the material exhibited no cracking or spalling and retained its shape.

Examples 2-5

The discs of material, heated to about 900°C for about one hour, were firm. The heated discs were fused, without the appearance of having melted.

Examples 6-8

The discs of material, heated to about 900°C, were firm. The heated discs were fused, without the appearance of having melted, and did not exhibit cracking or spalling.

Example 9

The disc of material, heated to about 900°C for about 17.5 hours, melted, due, it was thought, to the presence of the boric acid (a fluxing agent).

9

EP 0 639 701 A1

Examples 10-15

The discs of material, heated to about 900°C for about 17.5 hours, were fused without the appearance of having melted, and exhibited no cracking or spalling.

Example 16

The disc of material, heated to about 900°C for about 36 hours, softened, but did not melt to the degree observed for Example 9.

Example 17

The disc of material, heated to about 900°C, was fused without the appearance of having melted, and exhibited no cracking or spalling.

Examples 18-22

These formulations were reinforced using aluminoborosilicate ceramic fiber yarn ("NEXTEL 312 CERAMIC FIBER"), as shown in FIG. 5. Each sample was heated for about 2 hours at about 950°C. Example 18 was firm at 950°C. Example 19 cracked severely and did not hold together very well. Example 20 was soft at 900°C. Examples 21 and 22 were firm at 900°C.

**Claims**

1. A mounting mat comprising:
   (a) a high temperature resistant, corrugated, metal wire mesh mat having a lateral edge; and
   (b) a sufficient amount of a high temperature sealing material covering said lateral edge to reduce penetration, when exposed to hot, impinging gases, of said gases through said lateral edge, said high temperature sealing material comprising binder material in the range from about 5 to about 85 percent by weight and dispersed therein glass particles in the range from about 95 to about 15 percent by weight, based on the total weight of said binder material and said glass particles, wherein said glass particles are made of a glass having a softening point of at least about 350°C, and wherein the combined weight of said binder material and said glass particles is at least 20 percent by weight of the total weight of said high temperature sealing material.

2. The mounting mat according to claim 1 wherein said high temperature resistant, corrugated, metal wire mesh mounting mat is made of stainless steel.

3. The mounting mat according to claim 1 or 2 wherein said binder material includes at least one of a plasticizer, a tackifier, or both.

4. A catalytic converter or a diesel particulate filter comprising a metallic casing, a catalytic converter element or a diesel particulate filter element disposed within said metallic casing, and said mounting mat according to any preceeding claim disposed between said catalytic converter element or said diesel particulate filter element and said metallic casing for positioning said catalytic converter element or said diesel particulate filter element within said metallic casing and for absorbing mechanical vibration.

5. A mounting mat comprising:
   (a) a high temperature resistant, corrugated, metal wire mesh mat having first and second lateral edges; and
   (b) a sufficient amount of a high temperature sealing material incorporated into said mounting mat to reduce penetration, when exposed to hot, impinging gases, of said gases through said first lateral edge to said second lateral edge, said high temperature sealing material comprising binder material in the range from about 5 to about 85 percent by weight and dispersed therein glass particles in the range from about 95 to about 15 percent by weight, based on the total weight of said binder material and said glass particles, wherein said glass particles are made of a glass having a softening point of at least about 350°C; and wherein the combined weight of said binder material and said glass

10

particles is at least 20 percent by weight of the total weight of said high temperature sealing material.

6. The mounting mat according to claim 5 wherein said high temperature resistant, corrugated, metal wire mesh mounting mat is made of stainless steel.

7. The mounting mat according to claim 5 or 6 wherein said binder material includes at least one of a plasticizer, a tackifier, or both.

8. A catalytic converter or a diesel particulate filter comprising a metallic casing, a catalytic converter element or a diesel particulate filter element disposed within said metallic casing, and said mounting mat according to claim 5, 6, or 7 disposed between said catalytic converter element or said diesel particulate filter element and said metallic casing for positioning said catalytic converter element or said diesel particulate filter element within said metallic casing and for absorbing mechanical vibration.

9. A catalytic converter or a diesel particulate filter comprising:
   (a) a metallic casing;
   (b) a catalytic converter element or a diesel particulate filter element disposed within said metallic casing;
   (c) a high temperature resistant, corrugated, metal wire mesh mounting mat having a lateral edge, said mounting mat being disposed between said catalytic converter element or said diesel particulate filter element and said metallic casing for positioning catalytic converter element or said diesel particulate filter element within said metallic casing and for absorbing mechanical vibration; and
   (d) a sufficient amount of a high temperature sealing material positioned between said metallic casing and said catalytic converter element or said diesel particulate filter element, and positioned with respect to said lateral edge of said mounting mat to reduce penetration, when exposed to hot gases, of said gases through said lateral edge, said high temperature sealing material comprising binder material in the range from about 5 to about 85 percent by weight and dispersed therein glass particles in the range from about 95 to about 15 percent by weight, based on the total weight of said binder material and said glass particles, wherein said glass particles are made of a glass having a softening point of at least about 350°C, and wherein the combined weight of said binder material and said glass particles is at least 20 percent by weight of the total weight of said high temperature sealing material.

10. A catalytic converter or a diesel particulate filter according to claim 9 wherein said high temperature resistant, corrugated, metal wire mesh mounting mat is made of stainless steel.

11. A catalytic converter or a diesel particulate filter according to claim 9 or 10 wherein said binder material includes at least one of a plasticizer, a tackifier, or both.

11

10

**Fig. 1**

30

13

33

21

11

32

34

12

20

32

33 34

11

12

21

20

**Fig. 2**

30A

32A

36A

34A

**Fig. 3**

32B

30B

38B

34B

**Fig. 4**

32C

30C

40

34C

**Fig. 5**

54

52

50

56

55

57

**Fig. 6**

12

EP 0 639 701 A1

**Fig. 7**

**Fig. 8**

**Fig. 9**

**Fig. 10**

13

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE-A-38 20 981 (LEISTRITZ AG)<br><br>* column 3, line 33 - column 4, line 36; figure 1 *<br>--- | 1,2,4,9,10 | F01N3/28<br>F01N3/02 |
| A | US-A-3 963 445 (KOYAMA)<br>* the whole document *<br>--- | 1,4,9 | |
| A | FR-A-2 273 943 (ENGELHARD MINERALS & CHEMICALS CORPORATION)<br>* page 5, line 34 - page 9, line 25; figure 1 *<br>--- | 1,4,9 | |
| A | FR-A-2 392 709 (ENGELHARD MINERALS & CHEMICALS CORPORATION)<br>* page 4, line 34 - page 6, line 22 *<br>* page 10, line 6 - line 17; figures 1,4 *<br>--- | 1,4,9 | |
| A | PATENT ABSTRACTS OF JAPAN<br>vol. 12, no. 195 (M-705) (3042) 7 June 1988<br>& JP-A-63 001 708 (YUTAKA GIKEN) 6 January 1988<br>* abstract *<br>--- | 5,6,8 | TECHNICAL FIELDS SEARCHED (Int.Cl.6)<br><br>F01N |
| A | US-A-4 500 099 (KITAGAWA)<br>* column 9, line 48 - column 15, line 40; figures 1-7 *<br>--- | 5,8 | |
| A | WO-A-81 00738 (ZEUNA STAERKER GMBH & CO)<br>* page 6, line 1 - page 7, line 25; figures 1-4 *<br>--- | 5,8 | |
| A | DE-C-35 14 150 (LEISTRITZ MASCHINENFABRIK)<br>----- | | |

The present search report has been drawn up for all claims

| Place of search | Date of completion of the search | Examiner |
|---|---|---|
| THE HAGUE | 24 November 1994 | Friden, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)